Europäisches Patentamt

European Patent Office

Office européen des brevets

(19)

(11) Numéro de publication: **0 242 258**
**B1**

(12) **FASCICULE DE BREVET EUROPEEN**

(45) Date de publication du fascicule du brevet: **30.01.91**

(51) Int. Cl.⁵: **G 06 F 15/336**, G 10 L 9/08

(21) Numéro de dépôt: **87400669.5**

(22) Date de dépôt: **25.03.87**

(54) **Dispositif de mise en oeuvre d'un algorithme dit de LEROUX- GUEGUEN,pour le codage d'un signal par prédiction linéaire.**

(30) Priorité: **03.04.86 FR 8604800**

(43) Date de publication de la demande:
**21.10.87 Bulletin 87/43**

(45) Mention de la délivrance du brevet:
**30.01.91 Bulletin 91/05**

(84) Etats contractants désignés:
**DE GB**

(56) Documents cités:
**GB-A-2 052 219**
**GB-A-2 060 322**

**IEEE ELECTRO, vol. 7, mai 1982, pages 1-6(22/5), New York, US; J.A. FELDMAN et al.: "A compact, flexible LPC vocoder based on a commercial signal processing microcomputer"**

**IEEE TRANSACTIONS ON ACOUSTICS, SPEECH, AND SIGNAL PROCESSING, vol. 25, no. 3, juin 1977, pages 257-259, New York, US; J. LE ROUX et al.: "A fixed point computation of partial correlation coefficients"**

(73) Titulaire: **Moreau, Nicolas**
**24, rue Castagnary**
**F-75015 Paris (FR)**
(73) Titulaire: **Barral, Henri**
**7, rue Pasteur**
**F-92340 Bourg la Reine (FR)**

(72) Inventeur: **Moreau, Nicolas**
**24, rue Castagnary**
**F-75015 Paris (FR)**
Inventeur: **Barral, Henri**
**7, rue Pasteur**
**F-92340 Bourg la Reine (FR)**

(74) Mandataire: **Mongrédien, André et al**
**c/o BREVATOME 25, rue de Ponthieu**
**F-75008 Paris (FR)**

Courier Press, Leamington Spa, England.

# EP 0 242 258 B1

**Description**

La présente invention concerne un dispositif de mise en oeuvre d'un algorithme dit de LEROUX-GEUGUEN, pour le codage d'un signal par prédiction linéaire.

L'invention s'applique aux traitements de signaux très variés (signaux sismiques, biologiques, de parole, radars, téléphoniques, ...).

Dans la transmission d'un signal téléphonique par exemple, à faible débit, il est souhaitable de représenter le signal de parole sous une forme très condensée qui permettre néanmoins de conserver une bonne intelligibilité de la parole à la réception de ce signal condensé. Pour cela, on cherche à créer un signal synthétique le plus ressemblant possible au signal originale, grâce à une technique de modélisation dite de codage par prédiction linéaire. Ce codage est effectué de la manière suivante:

le signal est échantillonné à une fréquence constante. A partir des échantillons pris sur une durée pour laquelle on suppose que les caractéristiques statistiques du signal restent constantes, on calcule des coefficients $R_i$ de corrélation du signal échantillonné. i est un nombre entier variant de 0 à 10 par exemple. Ces coefficients permettent d'otenir une condensation importante des informations caractéristiques du signal. Ces coefficients de corrélation donnent un bon modèle de représentation du signal original. Les coefficients de corrélation $R_i$, ainsi que leur obtention sont décrits dans l'article "Single Chip LPC Vocoder" de Stephen P. Pope et al paru dans IEEE International Solid State Circuits Conference — pages 118 et 119 — 22 Février 1984.

On sait également qu'après avoir calculé ces coefficients de corrélation, il est ensuite nécessaire d'effecteur une transformation non linéaire de ces coefficients vers d'autres coefficients $K_i$ dits "coefficients de corrélation partiels", qui possèdent de meilleures propriétés de sensibilité, de classification, de codage, ... etc. Ces coefficients sont aussi appelés coefficients PARCOR.

La transformation non linéaire qui permet d'obtenir les coefficients de corrélation partiels $K_i$ à partir des coefficients de corrélation $R_i$ est effectuée grâce à un algorithme connu sous le nom d'algorithme de LEROUX-GUEGUEN.

L'algorithme de LEROUX-GUEGUEN est décrit dans un article intitulé "A fixed point computation of partial correlation coefficients" de J. LEROUX et C. GUEGUEN paru dans la revue IEEE Transactions on ASSP — June 1977 et un dispositif qui met en oeuvre cet algorithme est décrit dans le document GB—A—2 052 219.

Le dispositifs connus qui permettent de mettre en oeuvre l'algorithme de LEROUX-GUEGUEN pour obtenir les coefficients de corrélation partiels, à partir des coefficients de corrélation d'un signal, utilisent généralement des processeurs associés à des mémoires ainsi que des additionneurs, multipleurs, ... etc. Ces dispositifs présentent une architecture compliquée; ils nécessitent des programmes de traitements pour l'obtention des coefficients de corrélation partiels. Ces dispositifs ne peuvent en aucun cas constituer un circuit intégré unique et de faible dimension. Généralement, ces dispositifs occupent une surface importante et les composants qui les constituent peuvent occuper plusieurs cartes.

L'invention a pour but de remédier aux inconvénients des dispositifs existants, permettant de mettre en oeuvre l'algorithme de LEROUX-GUEGUEN, pour le codage d'un signal par prédiction linéaire. L'invention permet notamment d'obtenir un dispositif qui peut être constitué sous forme d'un circuit intégré unique (ou partie de circuit), de faible surface, peu coûteux, ne nécessitant aucun programme de traitement. Dans la suite de la description, les coefficients de corrélation partiels seront appelés, de façon connue, coefficients PARCOR.

L'invention a pour objet un dispositif de mise en oeuvre d'un algorithme dit de LEROUX-GUEGUEN pour le codage d'un signal par prédiction linéaire, ce dispositif recevant sur une entrée, des coefficients $R_k$ de corrélation du signal échantillonné, k=o ... p, et fournissant sur une sortie des coefficients $k_i$ de corrélation partiels, dits PARCOR, i étant un entier variant de 1 à un nombre p prédéterminé de coefficients, caractérisé en ce qu'il comporte 2p registres à décalage, reliés selon un anneau, de sorte qu'une sortie d'un registre de rang j+1 soit reliée à l'entrée d'un registre de rang j, j=1 ... 2p−2, un premier multiplexeur dont une première entrée et une sortie sont reliées respectivement à la sortie du registre de rang 1 et à l'entrée du registre de rang 2p, une deuxième entrée de ce premier multiplexeur constituant l'entrée du dispositif recevant des coefficients de corrélation $R_i$, un deuxième multiplexeur dont une première entrée et une sortie sont reliées respectivement à la sortie du registre de rang 2p et à l'entrée du registre de rang 2p−1, un diviseur dont une première entrée est reliée à la sortie du premier multiplexeur et dont une deuxième entrée est reliée à la sortie du deuxième multiplexeur, une sortie de ce diviseur constituant la sortie du dispositif fournissant les coefficients $K_i$ PARCOR, un premier multipleur dont une première entrée est reliée à une sortie du registre de rang 3 et dont une deuxième entrée est reliée à la sortie du diviseur, un premier additionneur dont une première entrée est reliée à une sortie du premier multipleur et dont une deuxième entrée est reliée à la sortie du registre de rang 3, une sortie de ce premier additionneur étant reliée à une troisième entrée du premier multiplexeur, un deuxième multiplieur dont une première entrée est reliée à la sortie du registre de rang 2 et dont une deuxième entrée est reliée à la sortie du diviseur, un deuxième additionneur dont une première entrée est reliée à une sortie du deuxième multiplieur et dont une deuxième entrée est reliée à la sortie du registre de rang 2p, une sortie de l'additionneur étant reliée à une deuxième entrée du deuxième multiplexeur, et des moyens de séquencement ayant des sorties de commande reliées à des entrées de commande des premier et deuxième multiplieurs, des premier et

2

deuxième multiplexeurs et du diviseur et du diviseur, pour commander l'initialisation du dispositif par chargement des coefficients de modélisation $R_i$ dans les registres sous forme de premières variables intermédiaires

$$I_0^o = R_0, \quad I_1^o = R_1 \quad \ldots\ldots\ldots I_{p-1}^o = R_{p-1} \quad et$$

$$E_1^o = R_1, \quad E_2^o = R_2 \quad \ldots\ldots\ldots E_p^o = R_p,$$

où à la fin de l'initialisation du dispositif, les premières variables intermédiaires $I_0^o, E_1^o, I_1^o, E_2^o, \ldots, I_{p-1}^o$ et $E_p^o$ sont chargées respectivement dans les registres $X_1, X_2, X_3, X_4, \ldots, X_{2p-1}$ et $X_{2p}$,
puis pour commander le diviseur pour le calcul du premier coefficient de corrélation partiel

$$K_1 = -\frac{E°1}{I_0},$$

puis pour commander les multipleurs pour calculer les nouvelles valeurs

$$I_0^1 = I_0^o + K_1 E_1^o \quad \ldots\ldots\ldots, \quad I_{p-1}^1 = I_{p-1}^o + K_1 E_p^o \quad et$$

$$E_1^1 = E_2^o + K_1 I_1^o \quad \ldots\ldots\ldots, \quad E_p^1 = E_{p+1}^o + K_1 I_p^o$$

des nouvelles variables intemédiaires qui sont chargées dans les registres pour calculer le second coefficient de corrélation partiel

$$K_2 = -\frac{E_1^1}{I_0^1},$$

et ainsi de suite jusqu'au calcul du coefficient de corrélation partiel

$$K_i = -\frac{E_i^i}{I_0^i} \quad de\ rang\ i=p.$$

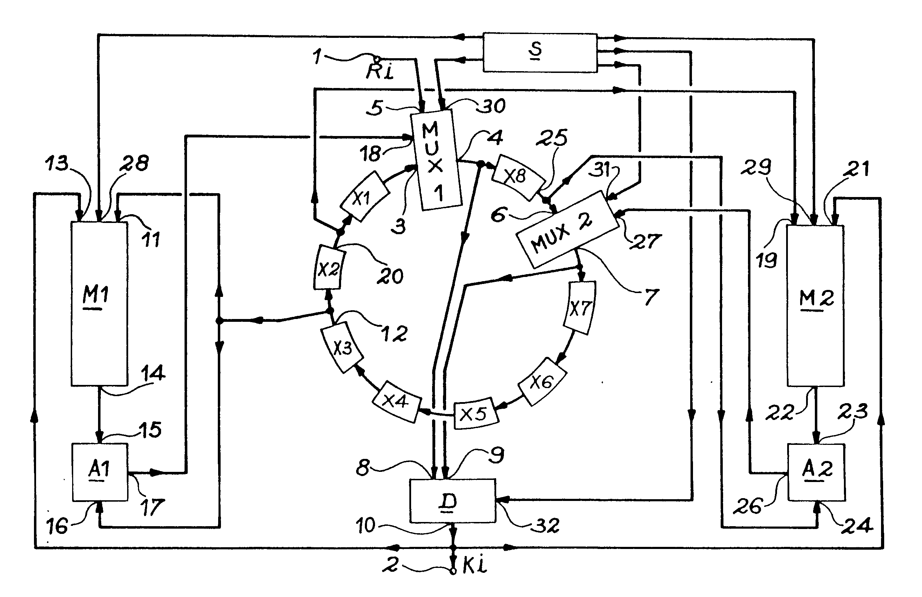

Les caractéristiques et avantages de l'invention ressortiront mieux de la description qui va suivre donnée en référence à la figure annexée qui représente schématiquement un dispositif de mise en oeuvre d'un algorithme de LEROUX-GUEGUEN, conforme à l'invention.

Cette description est donnée en exemple pour une architecture de registre série-série. Une architecture parallèle n'entraînerait que quelques modifications mineures.

Le dispositif reçoit sur une entrée 1 des coefficients $R_i$ de corrélation ou de modélisation d'un signal échantillonné. Il fournit sur une sortie 2, des coefficients $K_i$ de corrélation partiels encore appelés coefficients PARCOR. L'indice i est un nombre entier variant de 1 à un nombre p prédéterminé de coefficients.

Le dispositif comporte 2p registres à décalage, à entrée et à sortie dérie. Dans l'exemple de réalisation représenté sur cette figure p=4 et le dispositif comprend 2×4=8 registres à décalage représentés en X1, X2, X3, X4, X5, X6, X7, X8. Ces registres sont reliés en série selon un anneau, de sorte que la sortie du registre de rang i+1 soit reliée à l'entrée du registre de rang i. Par exemple, sur cette figure, la sortie du registre de rang i+1=5 est reliée à l'entrée du registre de rang i=4. L'entrée du registre de rang 2p est reliée à la sortie du registre de rang 1. Dans l'exemple représenté sur cette figure, l'entrée du registre de rang 8 est reliée à la sortie du registre de rang 1. Le dispositif comprend aussi un premier multiplexeur MUX1 dont une entrée 3 et une sortie 4 relient la sortie du registre X1 de rang 1, à l'entrée du registre X8 de range 2p=8, dans l'exemple représenté sur cette figure. Une autre entrée 5 de ce premier multiplexeur constitue l'entrée du dispositif recevant les coefficients de corrélation $R_i$.

Le dispositif comprend aussi un deuxième multiplexeur MUX2 dont une entrée 6 et une sortie 7 relient la sortie du registre de rang 2p (registre X8 dans l'exemple considéré), à l'entrée du registre de rang 2p−1 (registre X7 sur la figure).

Les sorties 4, 7 des premier et deuxième multiplexeurs sont respectivement reliées aux entrées d'un diviseur série D. La sortie 10 de ce diviseur constitue la sortie du dispositif, qui fournit le coefficient $K_i$ PARCOR.

3

Le dispositif comprend aussi un premier multiplieur M1 dont une entrée 11 est reliée à une sortie 12 du registre X3 de rang i=3. Une autre entrée 13 de ce premier multiplieur est reliée à la sortie 10 du diviseur D.

Une sortie 14 du premier multiplieur M1 est reliée à une entrée 15 d'un premier additionneur A1, dont une autre entrée 16 est reliée à la sortie 12 du registre X3 de rang i=3. Une sortie 17 du premier additionneur A1 est reliée à une entrée 18 du premier multiplexeur MUX1.

Le dispositif comprend aussi un deuxième multiplieur M2 dont une entrée 19 est reliée à la sortie 20 du registre X2 de rang i=2. Une autre entrée 21 du deuxième multiplieur M2, est reliée à la sortie 10 du diviseur D.

Un sortie 22 du deuxième multiplieur est reliée à une entrée 23 d'un deuxième additionneur A2. Une autre entrée 24 de ce deuxième additionneur est reliée à la sortie 25 du registre de rang 2p (registre X8 dans l'exemple considéré). Une sortie 26 du deuxième additionneur A2 est reliée à une entrée 27 du deuxième multiplexeur MUX2.

Enfin, le dispositif comprend des moyens de séquencement S ayant des sorties de commande reliées respectivement à des entrées de commande 28, 29, 30, 31, 32, des premier et deuxième multiplieurs M1, M2, et des premier et deuxième multiplexeurs MUX1 et MUX2 et du diviseur D. Le fonctionnement du dispositif et le rôle des moyens de séquencement S seront décrits plus loin en détail. Les registres, multiplexeurs, additionneurs, ainsi que le diviseur, ne sont pas représentés de manière détaillée sur la figure puisque ces composants sont bien connus dans l'état de la technique. Les multiplieurs M1, M2 peuvent être d'un type décrit dans l'article intitulé "Circuits for Digital Signal Processing" de H. BARRAL et N. MOREAU — ICASSP84, San Diego — Mars 1984.

Le fonctionnement du dispositif et notamment la mise en oeuvre de l'algorithme de LEROUX-GUEGUEN vont maintenant être décrits de manière plus détaillée.

Le traitement des coefficients $R_i$ de corrélation, appliqués à l'entrée du dispositif, et permettant d'obtenir des coefficients PARCOR $K_i$, met en oeuvre l'algorithme de LEROUX-GUEGUEN dans lequel interviennent des variables intermédiaires. Les valeurs successives i sont, comme indiqué plus haut comprises entre 1 et un nombre p qui est égal à 4 dans l'exemple de réalisation considéré.

Les variables intermédiaires I, E utilisées dans l'algorithme de LEROUX-GUEGUEN sont obtenues par traitement des coefficients de corrélation $R_i$, par itérations successives effectuées par le dispositif, comme le montre le tableau 1.

La partie A de ce tableau permet de mieux comprendre l'initialisation du dispositif à partir des valeurs $R_i$ allant de $R_0$ à $R_p$, (c'est-à-dire de $R_0$ à $R_4$ dans l'exemple de réalisation considéré). A l'initialisation, les premières variables intermédiaires $I_0^o \ldots I_{p-1}^o$ correspondent respectivement aux coefficients de corrélation $R_0 \ldots R_{p-1}$. Les premières variables intermédiaires $E_1 \ldots E_p^o$ correspondent respectivement aux coefficients de corrélation $R_1 \ldots R_p$.

L'initialisation du dispositif consiste donc à charger dans les registres correspondants, ces premières variables intermédiaires. Cette opération est effectuée en appliquant les valeurs successives $R_0 \ldots R_p$ sur l'entrée 1 du dispositif et en appliquant sur les entrées de commande 30, 31 des multiplexeurs MUX1, MUX2 des signaux de commande provenant des moyens de séquencement S. Ce séquencement ainsi que le chargement des registres correspondants apparaît dans le tableau 2.

Selon le mode de réalisation représenté sur la figure, le dispositif qui comporte huit registres permet d'obtenir quatre coefficients PARCOR $K_1, K_2, \ldots K_4$, à partir de cinq coefficients de corrélation $R_0 \ldots R_4$. L'initialisation s'effectue entre les instants $T_0$ et $T_7$ déterminés par les moyens de séquencement S. A l'instant $T_0$, le registre X8 de range 2p=8 est chargé par les éléments binaires représentatifs du premier coefficient de corrélation $R_0$. A l'instant $T_1$ on applique à nouveau des valeurs binaires représentatives du premier coefficient de corrélation $R_0$ sur l'entrée 1 du multiplexeur MUX1. Ces éléments binaires sont appliqués sur l'entrée série du registre X8 qui transfère son contenu ($R_0$) dans le registre X7. Bien entendu, à l'instant $T_1$ des signaux de commande sont appliqués sur les entrées de commande 31, 32 des multiplexeurs MUX1, MUX2 par les moyens de séquencement S. Il en résulte qu'à l'instant $T_1$, les registres X8 et X7 sont chargés respectivement par des éléments binaires correspondant au premier coefficient de corrélation $R_0$.

Ainsi, par des doubles répétitions des valeurs correspondant respectivement aux coefficients de corrélation $R_0, R_1, R_2, R_3$ appliqués aux entrées du registre X8 entre les instants $T_0$ et $T_7$ et par des décalages successifs de ces valeurs à l'intérieur des registres, les registres X1 et X8 sont à l'instant $T_7$ chargés par les coefficients de corrélation $R_0 \ldots R_3$ tels qu'indiqués dans la colonne $T_7$ du tableau 2. A l'instant $T_8$ les valeurs correspondant au coefficient de corrélation $R_4$ sont appliquées sur l'entrée du registre X8 opérant ainsi un décalage supplémentaire du contenu des registres. A l'instant $T_8$, les coefficients de corrélation dont les valeurs sont chargées à l'intérieur des registres, sont indiqués dans la colonne $T_8$ du tableau 2. Ces contenus des registres X1, X8 corespondent aux première valeurs intemédiaires I et E utilisés dans l'algorithme de LEROUX-GUEGUEN. Ces valeurs intermédiaires $I_0^o \ldots I_{p-1}^o$, $E_1^o \ldots E_p^o$ sont, dans l'exemple de réalisation considéré, telles qu'indiquées dans la colonne $T_8$ du tableau 2: $I_0^o \ldots I_3^o$, $E_1^o \ldots E_4^o$.

A partir de l'instant $T_2$, il est possible de calculer le premier coefficient PARCOR

$$K_1 = -\frac{E_1^o}{I_0^o}$$

défini dans l'algorithme de LEROUX-GUEGUEN. En effet, à l'instant $T_2$, les valeurs correspondant aux coefficients de corrélation $R_1$ et $R_0$ sont disponibles respectivement sur l'entrée et sur la sortie du registre X8, qui sont respectivement reliées aux entrées du diviseur D. Ce diviseur reçoit sur son entrée 32 un signal de commande fourni par les moyens de séquencement S.

Toute cette phase d'initialisation est décrite dans la partie A du tableau 1.

A l'instant $T_9$ commence la première itération qui va permettre de calculer le deuxième coefficient PARCOR

$$K_2 = -\frac{E_1^1}{I_1^0}$$

défini dans l'algorithme de LEROUX-GUEGUEN. Cette première itération est décrite dans la partie B du tableau 1. Elle permet une réactualisation des varaibles I, E. A l'instant $T_9$ on applique la valeur $I_0^0$ correspondant au coefficient de corrélation $R_0$ sur l'entrée du registre X8, par l'intermédiaire du multiplexeur MUX1 commandé par les moyens de séquencement S. Il en résulte que le contenu de chaque registre de rang i est transféré dans le registre de rang $i-1$. C'est ainsi par exemple que le contenu $E_4^0$ du registre X8 est transféré dans le registre X7, que le contenu $I_3^0$ du registre X7 est transféré dans le registre X6, ... etc. Les valeurs des coefficients contenues dans les différents registres à l'instant $T_9$ sont indiquées dans la colonne correspondante du tableau 2.

Selon l'algorithme de LEROUX-GUEGUEN, les nouvelles variables intermédiaires $I_0^1 \ldots I_{p-1}^1$ et $E_1^1 \ldots E_p^1$ sont obtenues en effectuant les opérations de multiplication et d'addition indiquées dans la partie B du tableau 1.

Le calcul des nouvelles variables intermédiaires $I_0^1$ et $E_1^1$ est effectué de la manière suivante. A l'instant $T_8$, la variable intermédiaire $E_1^0$ est disponible selon la sortie du registre X2. La variable intermédiaire $I_0^0$ est disponible sur la sortie du registre X8 à l'instant $T_9$. Il est donc possible de calculer grâce aux multiplieurs M2 à l'additionneur A2 la nouvelle variable intermédiaire $I_0^1 = I_0^0 + K_1 E_1^0$ qui est appliquée par la sortie 26 de l'additionneur A2 sur l'entrée 27 du multiplexeur MUX2. Cette nouvelle valeur $I_0^1$ chargée dans le registre X7 à l'instant $T_{10}$.

De la même manière et par suite des décalages, la valeur $I_1^0$ est disponible sur la sortie du registre X3 à l'instant $T_8$ et la valeur $E_2^0$ est disponible sur la sortie de ce registre à l'instant $T_9$. Le multiplieur M1 et l'additionneur A1 calculent alors la nouvelle variable intermédiaire $E_1^1 = E_2^0 + K_1 I_1^0$. Cette nouvelle variable intermédiaire est fournie sur la sortie 17 de l'additioneur A1; elles est appliquée au multiplexeur MUX1 pour être transférée dans le registre X8 à l'instant $T_{10}$.

A l'instant $T_9$, de décalages se sont opérés dans les contenus des registres, de sorte que le contenu du registre X2 est transféré dans le registre X1, le contenu du registre X3 est transféré dans le registre X2 ..., le contenu du registre X8 étant transféré dans le registre X7.

A partir de l'instant $T_{10}$, le diviseur D relié aux entrées des registres X7 et X8 calcule le deuxième coefficient PARCOR

$$K_2 = -\frac{E_1^1}{I_0^1} \quad ,$$

à partir des contenus des registres X8 et X7.

Les mêmes opérations de décalage et de calcul sont ensuite effectuées pour calculer les nouvelles variables intermédiaires $I_1^1$, $E_2^1$ à l'instant $T_{12}$, les nouvelles variables intermédiaires $I_2^1$, $I_3^1$ à l'instant $T_{14}$ ... etc. On a effectué ainsi, grâce à cette itération, une réactualisation des variables intermédiaires I, E.

Comme le montre la partie C du tableau, une deuxième itération analogue à la première itération qui vient d'être décrite, permet d'obtenir de nouvelles variables intermédiaires, et de calculer ainsi le troisième coefficient PARCOR

$$K_3 = -\frac{E_1^2}{I_0^2} \quad .$$

Des itérations successives permettent ainsi d'arriver au calcul du dernier coefficient PARCOR

$$K_i = -\frac{E_1^i}{I_0^i}$$

de rang i=p. Dans l'exemple de réalisation considéré ce coefficient est le coefficient

$$K_4 = -\frac{E_1^3}{I_0^3} \quad .$$

Le tableau 3 donne un calcul intermédiaire que doivent effectuer les additionneurs, les multiplieurs, ainsi que le diviseur, pour calculer les coefficients PARCOR $K_1$, $K_2$, $K_3$, $K_4$ ands l'exemple de réalisation considéré.

TABLEAU 1

| INITIALISATION | |
|---|---|
| $I_0^0 = \overbrace{R_0}^{R_i}$ <br><br> $I_1^0 = R_1$ <br><br> $I_{p-1}^0 = R_{p-1}$ | $E_1^0 = \overbrace{R_1}^{R_i}$ <br><br> $E_2^0 = R_2$ <br><br> $E_p^0 = R_p$ |
| calcul de $K_1 = -\dfrac{E_1^0}{I_0^0}$ | |

| PREMIERE ITERATION | |
|---|---|
| Réactualisation des variables I et E | |
| $I_0^1 = I_0^0 + K_1 E_1^0$ <br><br> $I_{p-1}^1 = I_{p-1}^0 + K_1 E_p^0$ | $E_1^1 = E_2^0 + K_1 I_1^0$ <br><br> $E_p^1 = E_{p+1}^0 + K_1 I_p^0$ |
| calcul de $K_2 = -\dfrac{E_1^1}{I_0^1}$ | |

| DEUXIEME ITERATION | |
|---|---|
| Réactualisation des variables I et E | |
| $I_0^2 = I_0^1 + K_2 E_1^1$ <br><br> $I_{p-1}^2 = I_{p-1}^1 + K_2 E_p^1$ | $E_1^2 = E_2^1 + K_2 I_1^1$ <br><br> $E_p^2 = E_{p+1}^1 + K_2 \cdot I_p^1$ |
| calcul de $K_3 = -\dfrac{E_1^2}{I_0^2}$ | |

| INTERACTIONS SUCCESSIVES JUSQU'A Kp |
|---|

# TABLEAU 2

| | $T_0$ | $T_1$ | $T_2$ | $T_3$ | $T_4$ | $T_5$ | $T_6$ | $T_7$ | $T_8$ | $T_9$ | $T_{10}$ | $T_{11}$ | $T_{12}$ | $T_{13}$ | $T_{14}$ | $T_{15}$ | $T_{16}$ | $T_{17}$ | $T_{18}$ |
|---|---|---|---|---|---|---|---|---|---|---|---|---|---|---|---|---|---|---|---|
| X1 | | | | | | | | $R_o$ | $R_o = I_o^o$ | $E_1^o$ | $I_1^o$ | $E_2^o$ | $I_2^o$ | $E_3^o$ | $I_3^o$ | $E_4^o$ | $I_o^1$ | | |
| X2 | | | | | | | $R_o$ | $R_o$ | $R_1 = E_1^o$ | $I_1^o$ | $E_2^o$ | $I_2^o$ | $E_3^o$ | $I_3^o$ | $E_4^o$ | $I_o^1$ | $E_1^1$ | | |
| X3 | | | | | | $R_o$ | $R_o$ | $R_1$ | $R_1 = I_1^o$ | $E_2^o$ | $I_2^o$ | $E_3^o$ | $I_3^o$ | $E_4^o$ | $I_o^1$ | $E_1^1$ | $I_1^1$ | | |
| X4 | | | | | $R_o$ | $R_o$ | $R_1$ | $R_1$ | $R_2 = E_2^o$ | $I_2^o$ | $E_3^o$ | $I_3^o$ | $E_4^o$ | $I_o^1$ | $E_1^1$ | $I_1^1$ | $E_2^1$ | | |
| X5 | | | | $R_o$ | $R_o$ | $R_1$ | $R_1$ | $R_2$ | $R_2 = I_2^o$ | $E_3^o$ | $I_3^o$ | $E_4^o$ | $I_o^1$ | $E_1^1$ | $I_1^1$ | $E_2^1$ | $I_2^1$ | | |
| X6 | | | $R_o$ | $R_o$ | $R_1$ | $R_1$ | $R_2$ | $R_2$ | $R_3 = E_3^o$ | $I_3^o$ | $E_4^o$ | $I_o^1$ | $E_1^1$ | $I_1^1$ | $E_2^1$ | $I_2^1$ | $E_3^1$ | | |
| X7 | | $R_o$ | $R_o$ | $R_1$ | $R_1$ | $R_2$ | $R_2$ | $R_3$ | $R_3 = I_3^o$ | $E_4^o$ | $I_o^1$ | $E_1^1$ | $I_1^1$ | $E_2^1$ | $I_2^1$ | $E_3^1$ | $I_3^1$ | | $I_o^2$ |
| X8 | $R_o$ | $R_o$ | $R_1$ | $R_1$ | $R_2$ | $R_2$ | $R_3$ | $R_3$ | $R_4 = E_4^o$ | $I_o^o$ | $E_1^1$ | $I_1^o$ | $E_2^1$ | $I_2^o$ | $E_3^1$ | $I_3^o$ | $E_4^1$ | $I_o^1$ | $E_1^2$ |

Début calcul $K_1 = -\dfrac{E_1^o}{I_o^o} = -\dfrac{R_1}{R_o}$

Début calcul $K_2 = -\dfrac{E_1^1}{I_o^1}$

EP 0 242 258 B1

EP 0 242 258 B1

TABLEAU 3

| | $K_1 = -\dfrac{E_1^0}{I_0^0}$ | $K_2 = -\dfrac{E_1^1}{I_0^1}$ | $K_3 = -\dfrac{E_1^2}{I_0^2}$ | $K_4 = -\dfrac{E_1^3}{I_0^3}$ |
|---|---|---|---|---|
| $I_0^0 = R_0$ | $I_0^1 = K_1 E_1^0 + I_0^0$ | $I_0^2 = K_2 E_1^1 + I_0^1$ | $I_0^3 = K_3 E_1^2 + I_0^2$ | |
| $I_1^0 = R_1$ | $I_1^1 = K_1 E_2^0 + I_1^0$ | $I_1^2 = K_2 E_2^1 + I_1^1$ | | |
| $I_2^0 = R_2$ | $I_2^1 = K_1 E_3^0 + I_2^0$ | | | |
| $I_3^0 = R_3$ | | | | |
| $E_1^0 = R_1$ | $E_1^1 = K_1 I_1^0 + E_2^0$ | $E_1^2 = K_2 I_1^1 + E_2^1$ | $E_1^3 = K_3 I_1^2 + E_2^2$ | |
| $E_2^0 = R_2$ | $E_2^1 = K_1 I_2^0 + E_3^0$ | $E_2^2 = K_2 I_2^1 + E_3^1$ | | |
| $E_3^0 = R_3$ | $E_3^1 = K_1 I_3^0 + E_4^0$ | | | |
| $E_4^0 = R_4$ | | | | |

**EP 0 242 258 B1**

**Revendication**

Dispositif de mise en oeuvre d'un algorithme dit de LEROUX-GUEGUEN pour le codage d'un signal par prédiction linéaire, ce dispositif recevant sur une entrée (1) des coefficients $R_k$ de corrélation du signal échantillonné, k=o ... p, et fournissant sur une sortie (2) des coefficients $K_i$ de corrélation partiels dits PARCOR, i étant un entier variant de 1 à un nombre p prédéterminé de coefficients, caractérisé en ce qu'il comporte 2p registres (X1 ... X8 ... X2p) à décalage, reliés selon un anneau, de sorte qu'une sortie d'un registre de rang j+1 soit reliée à une entrée du registre de rang j, j=1 ... 2p−2, un premier multiplexeur (MUX1) dont une première entrée et une sortie sont reliées respectivement à une sortie du registre (X1) de rang 1 et à une entrée du registre (X8) de rang 2p, une deuxième entrée (5) de ce premier multiplexeur constituant l'entrée (1) du dispositif qui reçoit les coefficients de corrélation $R_l$, un deuxième multiplexeur (MUX2) dont une première entrée et une sortie sont reliées respectivement à une sortie du registre (X8) de rang 2p et à une entrée du registre (X7) de rang 2p−1, un diviseur (D) dont une première entrée est reliée à la sortie du premier multiplexeur (MUX1) et dont une deuxième entrée est reliée à la sortie du deuxième multiplexeur (MUX2), une sortie (10) de ce diviseur constituant la sortie (2) du dispositif fournissant les coefficients $K_i$ PARCOR, un premier multiplieur (M1) dont une première entrée est reliée à une sortie du registre (X3) de rang 3 et dont une deuxième entrée est reliée à la sortie du diviseur, un premier additionneur (A1) dont une première entrée est reliée à une sortie du premier multiplieur (M1) et dont une deuxième entrée est reliée à la sortie du registre de rang 3, une sortie de ce premier additionneur étant reliée à une troisième entrée du premier multiplexeur (MUX1), un deuxième multiplieur (M2) dont une première entrée est reliée à une sortie du registre de rang 2 et dont une deuxième entrée est reliée à la sortie du diviseur (D), un deuxième additionneur (A2) dont une première entrée est reliée à une sortie du deuxième multiplieur (M2) et dont une deuxième entrée est reliée à la sortie du registre (X8) de rang 2p, une sortie du deuxième additionneur (A2) étant reliée à une deuxième entrée du deuxième multiplexeur (MUX2), et des moyens de séquencement (S) ayant des sorties de commande reliées à des entrées de commande des premier et deuxième multiplieurs (M1, M2), des premier et deuxième multiplexeurs (MUX1, MUX2) et du diviseur (D), pour commander l'initialisation du dispositif par chargement des coefficients de corrélation $R_i$ dans les registres, sous forme de premières variables intermédiaires

$$I_0^o = R_o, \quad I_1^o = R_1 \quad ........ I_{p-1}^o = R_{p-1} \quad et$$

$$E_1^o = R_1, \quad E_2^o = R_2 \quad ........ E_p^o = R_p,$$

où à la fin de l'initialisation du dispositif, les premières variables intermédiaires $I_o^o$, $E_1^o$, $I_1^o$, $E_2^o$, ... $I_{p-1}^o$ et $E_p^o$ sont chargées respectivement dans les registres $X_1, X_2, X_3, X_4, ..., X_{2p-1}$ et $X_{2p}$, puis pour commander le divisuer pour le calcul du premier coefficient de corrélation partiel

$$K_1 = -\frac{E_1^o}{I_o^o},$$

puis pour commander les multiplieurs pour calculer les nouvelles valeurs

$$I_0^1 = I_0^o + K_1 E_1^o \quad ........, \quad I_{p-1}^1 = I_{p-1}^o + K_1 E_p^o \quad et$$

$$E_1^1 = E_2^o + K_1 I_1^o \quad ........, \quad E_p^1 = E_{p+1}^o + K_1 I_p^o$$

des variables intermédiaires qui sont chargées dans les registres pour calculer le second coefficient de corrélation partiel

$$K_2 = -\frac{E_1^1}{I_o^1},$$

et ainsi de suite jusqu'au calcul du coefficient de corrélation partiel

$$K_i = -\frac{E_1^i}{I_o^i} \quad \text{de rang i=p.}$$

9

**Patentanspruch**

Vorrichtung zum Ausführen eines sogenannten LEROUX-GUEGUEN-Algorithmus zur Kodierung eines Signals durch lineare Vorhersage, wobei diese Vorrichtung in einem Eingang (1) Korrelationskoeffizienten $R_k$ des abgetasten Signals empfängt, k=0, ..., p, und in einem Ausgang (2) partielle Korrelationskoeffizienten, PARCOR genannt, erzeugt, wobei i eine ganze Zahl zwischen 1 und einer vorgegebenen Zahl p von Koeffizienten ist, dadurch gekennzeichnet, daß sie aufweist: 2p Schieberegister (X1 ... X8 ... X2p), die derart englang eines Ringes angeordnet sind, daß ein Ausgang eines Registers mit Rang j+1 mit einem Eingang des Registers mit Rang j, j=1 ... 2p−2, verbunden ist; einen ersten Multiplexer (MUX1), von dem ein erster Eingang und ein Ausgang jeweils mit einem Ausgang des Registers (X1) mit Rang 1 und einem Eingang des Registers (X8) mit Rang 2p verbunden ist, wobei ein zweiter Eingang (5) dieses ersten Multiplexers den Eingang (1) der Vorrichtung bildet, der die Korrelationskoeffizienten $R_i$ empfängt; einen zweiten Multiplexer (MUX2), von dem ein erster Eingang und ein Ausgang jeweils mit einem Ausgang des Registers (X8) mit Rang 2p und einem Eingang des Registers mit Rang 2p−1 verbunden ist; einen Teiler (D), von dem ein erster Eingang mit dem Ausgang des ersten Multiplexer (MUX1) verbunden ist und von dem ein zweiter Eingang mit dem Ausgang des zweiten Multiplexer (MUX2) verbunden ist, wobei ein Ausgang (10) dieses Teilers den Ausgang (2) der Vorrichtung bildet, der die Koeffizienten $K_i$ PARCOR erzeugt; einen ersten Multiplikator (M1), von dem ein erster Eingang mit einem Ausgang des Registers (X3) mit Rang 3 verbunden ist und von dem ein zweiter Eingang mit dem Ausgang des Teilers verbunden ist; einen ersten Addierer (A1), von dem ein erster Eingang mit einem Augang des ersten Multiplikators (M1) verbunden ist und von dem ein zweiter Eingang mit dem Ausgang des Registers mit Rang 3 verbunden ist, wobei ein Ausgang dieses ersten Addierers mit einem dritten Eingang des ersten Multiplexer (MUX1) verbunden ist; einen zweiten Multiplikator (M2), von dem ein erster Eingang mit einem Ausgang des Registers mit Rang 2 verbunden ist und von dem ein zweiter Eingang mit dem Ausgang des Teilers (D) verbunden ist; einen zweiten Addierer (A2), von dem ein erster Eingang mit einem Ausgang des zweiten Multiplikators (M2) verbunden ist und von dem ein zweiter Eingang mit dem Ausgang des Registers (X8) mit Rang 2p verbunden ist, wobei ein Ausgang des zweiten Addierers (A2) mit einem zweiten Eingang des zweiten Multiplexer (MUX2) verbunden ist; und Sequenziervorrichtungen (S) mit Steuerausgängen, die mit Steuereingängen der ersten und zweiten Multiplikators (M1, M2), des ersten und zweiten Multiplexers (MUX1, MUX2) und des Teilers (D) verbunden sind, um die Initialisierung der Vorrichtung zu steuern, indem die Korrelationskoeffizienten $R_i$ in die Register in der Form erster, intermediärer Variablen

$$I_0^0 = R_0, \; I_1^0 = R_1 \ldots I_{p-1}^0 = R_{p-1} \text{ und}$$

$$E_1^0 = R_1, \; E_2^0 = R_2 \qquad E_p^0 = R_p$$

geladen werden, wo am Ende der Initialisierung der Vorrichtung die ersten, intermediären Variablen $I_0^0$, $E_1^0$, $I_1^0$, $E_2^0$, ... $I_{p-1}^0$ und $E_p^0$ jeweils in die Register $X_1, X_2, X_3, X_4, \ldots, X_{2p-1}$ und $X_{2p}$ geladen werden, um dann den Teiler für die Berechnung des partiellen Korrelationskoeffizienten

$$K_1 = -\frac{E_1^0}{I_0^0} \; ,$$

zu steuern, um dann die Multiplikatoren zur Berechnung der neuen Werte

$$I_0' = I_0^0 + K_1 E_1^0 \ldots, \; I_{p-1}' = I_{p-1}^0 + K_1 E_p^0 \text{ und}$$

$$E_1' = E_2^0 + K_1 I_1^0 \ldots, \; E_p' = E_{p+1}^0 + K_1 I_p^0$$

der Intermediären Variablen zu steuern, die in die Register zur Berechnung des zweiten partiellen Korrelationskoeffizienten

$$K_2 = -\frac{E_1^>}{I_0^1} \; ,$$

geladen werden, und so weiter bis zur Berechnung des partiellen Korrelationskoeffizienten

$$K_i = -\frac{E_1^i}{I_0^i} \text{ mit dem Rang i=p.}$$

**Claim**

Apparatus for using a LEROUX-GUEGUEN algorithm for coding a signal by linear prediction, said apparatus receiving on one input (1) correlation coefficients $R_k$ of the sampled signal k=0, ... P and supplying on one output (2) partial correlation of PARCOR coefficients $K_i$, i being an integer ranging between 1 and a predetermined number p of coefficients, characterized in that it incorporates 2p shift registers (X1 ... X8 ... X2p), each connected in annular form, so that one output of a register of rank j+1 is connected to the input of a register of rank j, j=1 ... 2p−2, a first multiplexer (MUX1) whereof a first input and one output are respectively connected to the output of the register (X1) of rank 1 and to an input of the register (X8) of rank 2p, a second input (5) of said first multiplexer constitutes the input (1) of the apparatus receiving the correlation coefficients $R_i$, a second multiplexer (MUX2) whereof a first input and one output are respectively connected to the output of the register (X8) of rank 2p and to an input of the register (X7) of rank 2p−1, a divider (D) whereof a first input is connected to the output of the first multiplexer (MUX1) and whereof a second input is connected to the output of the second multiplexer (MUX2), an output (10) of said divider constituting the output (2) of the apparatus supplying the PARCOR coefficients $K_i$, a first multiplier (M1) whereof a first input is connected to one output of the register (X3) of rank 3 and whereof a second input is connected to the output of the divider, a first adder (A1) whereof a first input is connected to one output of the first multiplier (M1) and whereof a second input is connected to the output of the register of rank 3, one output of said first adder being connected to a third input of the first multiplexer (MUX1), a second multiplier (M2) whereof a first input is connected to the output of the register of rank 2 and whereof a second input is connected to the output of the diver (D), a second adder (A2) whereof a first input is connected to one output of the second multiplier (M2) and whereof a second input is connected to the output of the register of rank 2p, one output of the adder being connected to a second input of the second multiplexer (MUX2) and sequencing means (S) having control outputs connected to control inputs of the first and second multipliers (M1, M2), first and second multiplexers (MUX1, MUX2) and the divider (D) for controlling the initialization of the apparatus by loading correlation coefficients $R_i$ into the registers in the form of first intermediate variables

$$I^o_o = R_o, \quad I^o_1 = R_1 \quad \ldots \ldots \ldots \quad I^o_p{-}1 = R_{p-1} \quad \text{and}$$

$$E^o_1 = R_1, \quad E^o_2 = R_2 \quad \ldots \ldots \ldots \quad E^o_p{-}1 = R_p$$

where at the end of the initialization of the apparatus, the first intermediate variables $I^o_o$, $E^o_1$, $I^o_1$, $E^o_2$, ... $I^o_{p-1}$ and $E^o_p$ are respectively loaded into the registers $X_1$, $X_2$, $X_3$, $X_4$, ..., $X_{2p-1}$ and $X_{2p}$, then for controlling the divider for calculating the first partial correlation coefficient

$$K_1 = -\frac{E^o_1}{I^o_o} \, ,$$

then for controlling the multipliers for calculating the new values

$$I^1_o = I^o_o + K_1 E^o_1 \quad \ldots \ldots \ldots , \quad I^1_p{-}1 = I^o_p{-}1 + K_1 E^o_p \quad \text{and}$$

$$E^1_1 = E^o_2 + K_1 I^o_1 \quad \ldots \ldots \ldots , \quad E^1_p = E^o_p{+}1 + K_1 I^o_p$$

of the new intermediate variables which are loaded into the registers for calculating the second partial correlation coefficient

$$K_2 = -\frac{E^1_1}{I^1_o}$$

and so on to the calculation of the partial correlation coefficient

$$K_i = -\frac{E^i_1}{I^i_o} \quad \text{of rank i=p.}$$